# EUROPEAN PATENT SPECIFICATION

(11) **EP 4 261 432 B1**
(45) Date of publication and mention of the grant of the patent: **15.01.2025**
(21) Application number: 23163728.1
(22) Date of filing: 23.03.2023
(51) Int. Cl.: F16F 15/173

(54) **IMPROVED TORSIONAL VISCOUS DAMPER**
VERBESSERTER VISKOSER TORSIONSDÄMPFER
AMORTISSEUR VISQUEUX À TORSION AMÉLIORÉE

(30) Priority: 12.04.2022 IT 202200007250
(43) Date of publication of application: 18.10.2023
(73) Proprietor: Agla Power Transmission S.p.a., 10051 Avigliana (IT)
(72) Inventor: BONU', Stefano, 10051 AVIGLIANA (TO) (IT); ROBERT, Dominique Paul, 10051 AVIGLIANA (TO) (IT)
(74) Representative: Studio Torta S.p.A.

(56) References cited:
- CN-U- 207 470 690
- DE-A1- 102007 059 590
- DE-A1- 102014 204 852
- US-A- 3 603 172

## Description

### TECHNICAL SECTOR

This invention relates to a torsional viscous damper, i.e., a damper of torsional vibrations of the viscous fluid type normally used to dampen the torsional vibrations leaving an internal combustion engine component, for example an engine shaft.

### PRIOR ART

As is well known, the drive shaft in an internal combustion engine is subject to torsional vibrations due to periodic stresses caused by combustion in the cylinders.

These torsional vibrations translate into rotation irregularities when operating and, in addition, are transmitted to the other components of the engine via the transmission member, usually a belt.

The torsional vibrations may, thus, make some engine components to resonate, causing NVH issues in the vehicle where the engine is installed when operating.

In order to dampen these torsional vibrations, the use of dampers of torsional vibrations, of the viscous fluid type, or, more simply, "torsional viscous dampers", is known.

A typical torsional viscous damper comprises:
- a casing, or rim, defining a hub designed to be engaged by the engine shaft, and shaped so as to define an annular containment chamber; and
- a closing element, or lid, coupled to the casing to close the above-mentioned chamber, which houses an inertial mass immersed in a viscous fluid.

Specifically, the inertial mass is normally defined by a disc formed from a material of suitable mass and stiffness, usually a metal material, and housed inside the above-mentioned chamber in a bath of viscous damping fluid, normally based on silicone. Such a disc conveniently has an annular shape around the hub.

The lid is defined by a thin disc, with an annular shape around the hub, which is welded to the casing, to close the chamber, at two points: at the radially inner circular edge and at the radially outer circular edge.

Therefore, the two weldings extend axially, i.e., along a direction parallel to a longitudinal axis of the hub (i.e. of the damper).

In other words, the lid is firmly coupled and fixed to the casing in order to close the above-mentioned chamber using two circular and axial weldings.

More precisely, the casing delimits the chamber on three sides, while the lid closes and delimits the chamber on the remaining side.

In use, the damper is "planted" on the engine shaft and receives the torsional vibrations from this.

The kinetic energy produced by these torsional vibrations causes the inertial mass, which is contained in the chamber defined by the casing closed by the lid, to resonate. This causes the movement of the inertial mass inside the chamber.

The kinetic energy is, thus, transformed into heat via friction and, therefore, dissipated.

The Applicant has observed that the torsional viscous dampers of the type described above require additional improvements. In fact:
- each welding introduces weakness into the structure of the damper, which locally compromises the mechanical features of the material (of the lid and casing), usually at the points most stressed by the damper;
- since, in known dampers, the weldings extend in the axial direction, they are subject to axial stresses: in fact, although torsional dampers are particularly effective in softening torsional stresses, they are subject, directly and without any filter, to the axial stresses coming from the engine, which may be relatively strong (in the order of 400G-500G); each welding defines, therefore, a weak point of the damper relative to axial stress resistance;
- the casing and lid are defined by two pieces with profoundly different structural features, stiffness and shape, which results in an unbalanced structure prone to strong vibrations at certain speeds.

In addition, the Applicant has observed that, particularly for very high performance vehicle engines, it is desirable that the maximum damping constant is reached while reducing, as much as possible, the weight and cost per unit, without compromising the high speed and axial acceleration induced by the engine's crank shaft.

Document US3603172, which discloses a torsional damper with a single welding, is considered as the closest prior art.

### SUBJECT AND SUMMARY OF THE INVENTION

The purpose of this invention is to produce a torsional viscous damper that is highly reliable and inexpensive, and makes it possible to avoid at least some of the drawbacks specified above and connected to known torsional viscous dampers.

According to the invention, this purpose is achieved with a torsional viscous damper as claimed in the attached independent claims.

### BRIEF DESCRIPTION OF THE DRAWINGS

To better understand this invention, a preferred, but non-limiting, embodiment is described below, merely by way of example, and with the aid of the attached figures in which:

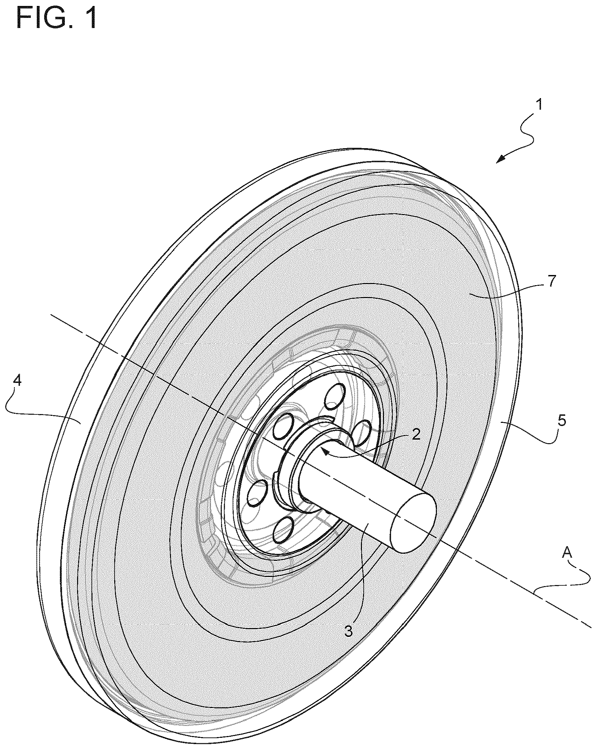

- Figure 1 is a perspective view of a torsional viscous damper produced according to this invention; and
- Figure 2 is an axial, cross-section view, on an enlarged scale and with parts removed for clarity, of the torsional viscous damper in Figure 1.

### DETAILED DESCRIPTION

With reference to the attached figures, reference number 1 denotes, as a whole, a damper of torsional vibrations, of the viscous fluid type, simply identified as a "torsional viscous damper" below.

The damper 1 comprises a hub 2 and is designed to be mounted on an engine shaft 3 (not illustrated), for example a crank shaft, to dampen the torsional vibrations transmitted by the engine to this shaft (in a known way not described in detail).

In particular, the damper 1 has a central rotation axis A, and the hub 2 is coaxial to the axis A and is designed to be axially engaged by the shaft 3.

The damper 1 comprises a casing 4 and a lid 5 coupled to each other to delimit a closed chamber 6, which is annular in relation (i.e. around) the axis A and containing a viscous damping fluid (of the known type not described in detail, for example a highly viscous, silicone-based fluid).

The damper 1 also comprises an inertial mass 7 housed in the chamber 6 so as to be immersed in the viscous fluid.

Specifically, the inertial mass 7 is normally defined by a disc formed from a material of suitable mass and stiffness, usually a metal material, and housed inside the above-mentioned chamber 6 in a bath of viscous damping fluid.

Preferably, but not necessarily, the inertial mass 7 is made of aluminium.

Alternatively, the inertial mass 7 is made of another metal material, for example steel, a steel alloy, or another metal alloy suitable for the purpose.

The disc defining the inertial mass 7 is, conveniently, annular around the hub 2.

Conveniently, the inertial mass 7 can rotate around the axis A independently of the casing 4 and the lid 5, i.e. it is not fixed firmly to the casing 4 and to the lid 5, but is coupled to these using special sliding interfaces, e.g. bearings (not illustrated).

The viscous fluid surrounds the annular inertial mass 7.

According to the invention, the damper 1 comprises a pair of half-shells 4, 5, of which a first half-shell 4 defines the casing and a second half-shell 5 defines the lid.

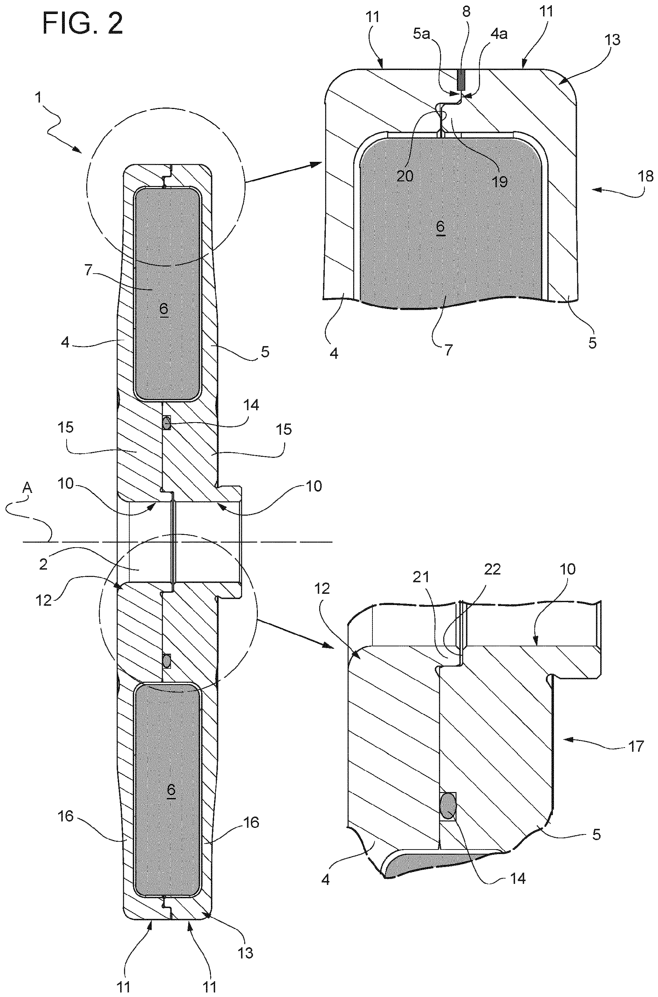

As can be seen in Figure 2, each half-shell 4, 5 defines part of the chamber 6 and part of the hub 2, and the half-shells 4, 5 are axially coupled to each other to define, together, the chamber 6 and the hub 2.

Specifically, each half-shell 4, 5 comprises an annular recess that defines part of the chamber 6.

More specifically, each half-shell 4, 5 basically defines, in this way, one half of the chamber 6. The chamber 6 is closed by mutual coupling of the half-shells 4, 5.

Again according to the invention, the half-shells 4, 5 are fixed to each other by means of a single welding 8, which extends angularly about the axis A.

In particular, the welding 8 is annular (or circular) around the axis A, i.e. it extends angularly and completely around the axis A.

Alternatively, the welding 8 may have a limited angular extension around the axis A, so as to define an individual welded section, or several welded sections, angularly distributed around the axis A, preferably equally spaced apart.

In the example illustrated, each half-shell 4, 5 has an annular shape around the axis A to define the hub 2.

Each half-shell 4, 5 has a radially annular inner edge 10 facing the axis A and a radially annular outer edge 11 opposite the inner edge 10, i.e. radially facing outside.

In particular, the inner edges 10 of the half-shells 4, 5 coupled to one another define a wedged radial end 12 of the damper 1 configured to be fixed to the shaft 3 by engaging with the hub 2.

In practice, the inner edges 10 radially delimit the hub 2.

Similarly, the outer edges 11 of the half-shells 4, 5 coupled to one another define a free radial end 13 of the damper 1, which is opposite the wedged end 12.

Advantageously, the above-mentioned single welding 8 is arranged at the free radial end 13.

In light of what was described above, the damper 1 is formed from two half-shells 4, 5 only welded together at a single point (i.e. at the free end 13), in contrast to known torsional viscous dampers, which comprise a casing defined by a shaped rim wherein a chamber for the inertial mass is formed, and a lid defined by a metal ring and positioned to close the chamber made in the casing, wherein the lid is welded to the casing at two points, as described in the introductory part of this description.

Thanks to the configuration of the damper 1 according to this invention, a particularly weak point of the damper 1, which is highly prone to breaking, i.e. the most radially inner welding, is eliminated. In fact, it is possible to avoid a highly defective point in the damper 1, since the mechanical features of the material of the two half-shells 4, 5 are not locally compromised at the most stressed points, which are usually near the hub 2 or, in any case, in the radially inner area of the damper 1. In contrast, the material of the damper 1, thanks to the presence of the two half-shells 4, 5 in place of the known casing and lid and thanks to the presence of a single welding 8 arranged at the free end 13 (and thus radially outer), keeps the original mechanical features at the most stressed points.

Advantageously, the welding 8 extends between the half-shells 4, 5 in the radial direction.

Specifically, each half-shell 4, 5 comprises an axial annular coupling surface 4a, 5a at the corresponding outer edge 11, i.e. near the outer edge 11 and at the free end 13 defined by the coupling of the half-shells 4, 5.

The coupling surfaces 4a, 5a of the coupled half-shells 4, 5 are arranged facing one and in contact, as can be seen in enlarged view in Figure 2.

According to one aspect of the invention, the welding 8 is axially interposed between the coupling surfaces 4a, 5a and extends in a radial direction to the axis A, between the coupling surfaces 4a, 5a.

In other words, the welding 8 has a negligible extension in the axial direction compared to its extension in the radial direction, i.e. it basically extends only in the radial direction.

This configuration is particularly advantageous: the Applicant has, in fact, been able to verify that the resistance of the damper 1 to the axial stresses is significantly improved compared to known dampers, in which the lid is fixed to the casing via two axial weldings, i.e. having a negligible extension in the radial direction compared to its extension in the axial direction. These known weldings are, in fact, subject to strong axial stresses (even in the order of 500G) coming from the engine and, thus, are particularly prone to giving way, leading to a reduction in the service life of the damper 1.

In addition, the inertial mass 7 is designed to push in the axial direction, adding an additional stress in this direction.

Thus, the radial welding 8 according to the invention mitigates this undesired effect and increases the service life of the damper 1.

Advantageously, the damper 1 comprises a sealing ring 14 arranged axially between the half-shells 4, 5 and radially interposed between the chamber 6 and the hub 2 and configured to prevent a leakage of the viscous fluid from the chamber 6 towards the hub 2.

In practice, the sealing ring 14, preferably made of elastomeric material, fills, without, in any case, introducing additional weaknesses and without compromising the features of the material, the sealing function that was performed by the radially inner second welding in the known dampers.

Preferably, the damper 1 comprises an additional sealing ring (not illustrated) arranged axially between the half-shells 4, 5 and radially interposed between the chamber 6 and the free end 13, i.e. between the chamber 6 and the welding 8.

In this way, a leakage of the viscous fluid towards the welding 8 is also avoided, which improves the performance of the welding 8 as well as its service life.

As can be seen in Figure 2, each half-shell 4, 5 includes a first radial portion 15 carrying the inner edge 10 and radially delimiting the hub 2, and a second radial portion 16 carrying the outer edge 11 and delimiting the chamber 6.

Specifically, the first portions 15 coupled to one another define a radially inner portion 17 of the damper 1, and the second portions 16 coupled to one another define a radially outer portion 18 of the damper 1.

According to one aspect of the invention, the radially inner portion 17 has a greater axial thickness than the axial thickness of the radially outer portion 18.

In particular, the radially inner portion 17 has an axial thickness greater than the axial thickness of the radially outer portion 18, of a value ranging between 1.1 and 2 times, preferably between 1.2 and 1.8 times, even more preferably between 1.2 and 1.4 times.

The Applicant has observed how this configuration improves the structural resistance of the damper 1, since the radially inner portion 17 represents, as mentioned, the most stressed point of the damper 1 itself. In addition, this configuration reduces the total diameter of the damper 1 and of the axial dimensions of the same, without compromising performance - actually improving it.

Conveniently, one of the half-shells 4, 5 (in the example illustrated, the half-shell 5) comprises, at the outer edge 11 (i.e. near the outer edge 11 and at the free end 13 defined by the coupling of the half-shells 4, 5), a first axial protuberance 19 extending towards the other of said half-shells 4, 5 and engaging a corresponding axial seat 20 formed in the other of said half-shells (in the example illustrated, the half-shell 4), so that the two half-shells 4, 5 have a complementary shape when coupled, preferably via interference, at said free ends 13.

Similarly, one of the half-shells 4, 5 (in the example illustrated, the half-shell 4) comprises, at the inner edge 10 (i.e. near the inner edge 10 and at the wedged end 12 defined by the coupling of the half-shells 4, 5), a second axial protuberance 21 extending towards the other of said half-shells 4, 5 and engaging a corresponding axial seat 22 formed in the other of said half-shells (in the example illustrated, the half-shell 5), so that the two half-shells 4, 5 have a complementary shape when coupled, preferably via interference, at said wedged end 12.

Each protuberance 19, 21 is preferably defined by an annular flange projecting axially towards the other of the half-shells 4, 5.

As a result, the seats 20, 21 are annular and extend, in the other of the half-shells 4, 5, in the axial direction.

Alternatively, the flanges 19, 21 could be defined by multiple, corresponding axial protuberances angularly distributed around the axis A, so as to define corresponding interrupted rings. As a result, the seats 20, 22 would also in this case be defined by recesses angularly distributed around the axis A.

As shown in Figure 2, each flange-seat coupling defines an axial shoulder for one or the other half-shell 4, 5.

This configuration provides a simple tool for ensuring the correct centring of the two half-shells 4, 5 thus facilitating their mutual coupling.

The second flange 21 is, preferably, radially interposed between the sealing ring 14 and the hub 2.

Therefore, the presence of the flanges 19, 21 and of the seats 20, 22, i.e. the presence of the axial shoulders, provides an additional means of sealing the viscous fluid. In fact, each shoulder defines a kind of labyrinthine path that makes it more difficult for the viscous fluid to leak out.

It should be noted that, in Figure 2, the left half-shell 4 denotes the casing, while the right half-shell 5 denotes the lid. In any case, this configuration is totally arbitrary.

In fact, according to one aspect of the invention, the half-shells 4, 5 have a basically symmetrical shape to each other in relation to a median radial plane (not illustrated) in relation to the axis A.

In practice, the damper 1 comprises two half-shells 4, 5 that are basically equal (in particular, without said flanges 19, 21 and seats 20, 22) and complementary with each other and in place of the normal casing and lid - mentioned above - of known dampers.

Thanks to this peculiar structural feature, the damper 1 is more balanced in terms of stresses in relation to known dampers, which have two pieces (casing and lid) with a totally different stiffness and shape, which results in an unbalanced structure prone to strong vibrations at certain speeds.

On the contrary, the stiffness of each half-shell 4, 5 is basically identical, resulting in the above-mentioned structural balancing of the damper 1 produced according to the invention and, thus, in an improvement in its performance.

In addition, the above-mentioned peculiar shape of the half-shells 4, 5 results in an improvement of the production process for the damper 1: a single forging mould (or moulding) to produce both half-shells 4, 5 will, in fact, be enough, before then producing the finishings (for example, the flanges 19, 21 and the seats 20, 22) via mechanical processing. On the contrary, for known dampers, two different types of mould are necessary for the casing and lid.

This, therefore, makes it possible to reduce production costs and times.

The half-shells 4, 5 are preferably made of metal, in particular aluminium.

Conveniently, the damper 1 also comprises clamping means (not illustrated) for axially clamping the half-shells 4, 5 together.

In one embodiment, the clamping means comprise screws extending through the radially inner portion 17 in the axial direction.

The clamping means assist in supporting the torsional stresses, which, thus, offload onto the clamping means, avoiding stressing the welding 8 too much.

The advantages afforded by the damper 1 produced according to this invention are apparent from an examination of the characteristics thereof.

In particular, thanks to the peculiar shape of the damper 1, according to this invention:
- it is possible to avoid a particularly weak point of the damper 1 that is especially prone to breaking, such as a second welding, keeping, however, unchanged, the local mechanical features of the material at the most stressed points;
- the welding 8 has a greater service life, since it extends radially and not axially, and is, thus, less subject to the strong axial stresses exerted on the damper 1;
- the damper 1 is generally more balanced compared to the known dampers, and its production is simpler and less costly;
- the sealing of the viscous fluid is ensured by the sealing ring 14, as well as assisted by the shoulders defined by the coupling of each flange 19, 21 with the corresponding seat 20, 22;
- the structural resistance of the damper 1 is improved thanks to the greater axial thickness of the radially inner portion 17 compared to the radially outer portion 18, since the radially inner portion 17 represents, as mentioned, the most stressed point of the damper 1 itself;
- it is possible to reduce, in general, the total dimensions and costs per damping unit, achieving the maximum damping constant, while reducing as much as possible the weight and cost per unit, without compromising the high speed and axial acceleration induced by the crank shaft of the engine, particularly for very high performance vehicles.

It is clear that changes may be made to the damper 1 described and illustrated herein, and variations produced thereto, without, for this reason, departing from the scope of protection defined by the claims.

## Claims

1. A torsional viscous damper (1) for damping torsional vibrations transmitted to a shaft (3) of an engine, the damper (1) having a central rotation axis (A) and comprising:
- a casing (4) and a lid (5) coupled together for delimiting a closed chamber (6), annular with respect to the central axis (A) and containing a viscous damping fluid; and
- an inertial mass (7) housed in the chamber (6) so as to be immersed in the viscous fluid;
wherein:
- the damper (1) comprises a pair of half-shells (4, 5), a first half-shell (4) defining the casing and a second half-shell (5) defining the lid, each half-shell (4 , 5) defining part of said chamber (6) and part of an axial hub (2) configured to be engaged by said shaft (3),
- the half-shells (4, 5) are axially coupled to one another for defining together said chamber (6) and said hub (2),
- the half-shells (4, 5) are fixed to each other by means of a single welding (8) which extends angularly about the central axis (A);
**characterised in that**
each half-shell (4, 5) has an annular shape around the central axis (A) for defining said hub (2), each half-shell (4, 5) having an inner edge (10) radially facing the central axis (A) and an outer edge (11) radially opposite to the inner edge (10);
- the inner edges (10) of the half-shells (4, 5) coupled to one another define a wedged radial end (12) of the damper (1) configured to be fixed to said shaft (3) ;
- the outer edges (11) of the half-shells (4, 5) coupled to one another define a free radial end (13) of the damper (1);
and wherein said single welding (8) is arranged at the free radial end (13).

2. The damper as claimed in claim 1, wherein said single welding (8) extends between the half-shells (4, 5) in a radial direction.

3. The damper as claimed in claims 1 and 2, wherein each half-shell (4, 5) comprises, at said outer edge (11), an axial annular coupling surface (4a, 5a);
wherein the coupling surfaces (4a, 5a) of the coupled half-shells (4, 5) are arranged facing one another in contact;
and wherein said single welding (8) is axially interposed between said coupling surfaces (4a, 5a) and extends in radial direction between said coupling surfaces (4a, 5a).

4. The damper as claimed in any one of the preceding claims, and comprising a sealing ring (14) arranged axially between the half-shells (4, 5) and radially interposed between said chamber (6) and said hub (2) and configured to prevent a leakage of said viscous fluid from the chamber (6) towards the hub (2).

5. The damper as claimed in any one of the previous claims, wherein each half-shell (4, 5) includes a first radial portion (15) carrying said inner edge (10) and radially delimiting said hub (2), and a second radial portion (16) carrying said outer edge (11) and delimiting said chamber (6);
wherein the first portions (15) coupled to one another define a radially inner portion (17) of the damper (1), and the second portions (16) coupled to one another define a radially outer portion (18) of the damper (1),
and wherein the radially inner portion (17) has an axial thickness greater than the axial thickness of the radially outer portion (18), preferably greater of a value comprised between 1.1 and 2 times, preferably between 1.2 and 1.8 times, even more preferably between 1.2 and 1.4 times.

6. The damper as claimed in any one of the previous claims, wherein one of said half-shells (4, 5) comprises, at said outer edge (11), a first axial protuberance (19) extending towards the other of said half-shells (4, 5) and engaging a corresponding axial seat (20) obtained in the other of said half-shells (4, 5), so that the two half-shells (4, 5) have a complementary shape upon coupling, preferably by interference fit, at said free end (13).

7. The damper as claimed in any one of the previous claims, wherein one of said half-shells (4, 5) comprises, at said inner edge (10), a second axial protuberance (21) extending towards the other of said half-shells (4, 5) and engaging a corresponding axial seat (22) obtained in the other of said half-shells (4, 5), so that the two half-shells (4, 5) have a complementary shape in coupling, preferably by interference fit, at said wedged end (12).

8. The damper as claimed in any one of the preceding claims, wherein the half-shells (4, 5) have a substantially symmetrical shape to one another relative to a median radial plane with respect to the central axis (A).

## Patentansprüche

1. Ein viskoser Torsionsdämpfer (1) zum Dämpfen von Torsionsschwingungen, die auf eine Welle (3) eines Motors übertragen werden, wobei der Dämpfer (1) eine zentrale Drehachse (A) hat und umfassend:
- ein Gehäuse (4) und einen Deckel (5), die miteinander gekoppelt sind, um eine geschlossene Kammer (6) zu begrenzen, die in Bezug auf die Mittelachse (A) ringförmig ist und ein viskoses Dämpfungsfluid enthält; und
- eine träge Masse (7), die in der Kammer (6) so untergebracht ist, dass sie in das viskose Fluid eingetaucht ist; wobei:
- der Dämpfer (1) ein Paar Halbschalen (4, 5) umfasst, wobei eine erste Halbschale (4) das Gehäuse und eine zweite Halbschale (5) den Deckel definiert, wobei jede Halbschale (5) einen Teil der Kammer (6) und einen Teil einer axialen Nabe (2) definiert, die so gestaltet ist, dass sie mit der Welle (3) in Eingriff kommt,
- die Halbschalen (4, 5) sind axial aneinandergekoppelt, um gemeinsam die Kammer (6) und die Nabe (2) zu bilden,
- die Halbschalen (4, 5) mittels einer Einzelschweißung (8), die sich winklig um die Mittelachse (A) erstreckt, aneinander befestigt sind;
**dadurch gekennzeichnet, dass**
jede Halbschale (4, 5) eine ringförmige Form um die Mittelachse (A) hat, um die Nabe (2) zu definieren, jede Halbschale (4, 5) einen inneren Rand (10), der radial zur Mittelachse (A) gerichtet ist, und einen äußeren Rand (11), der dem inneren Rand (10) radial gegenüberliegt, aufweist;
- die inneren Ränder (10) der miteinander gekoppelten Halbschalen (4, 5) ein verklemmtes radiales Ende (12) des Dämpfers (1) definieren, das so konfiguriert ist, dass es an der Welle befestigt wird,
- die äußeren Ränder (11) der miteinander gekoppelten Halbschalen (4, 5) ein freies radiales Ende (13) des Dämpfers (1) definieren;
und wobei die Einzelschweißung (8) an dem freien radialen Ende (13) angeordnet ist.

2. Der Dämpfer wie im Anspruch 1 beansprucht, wobei sich die Einzelschweißung (8) zwischen den Halbschalen (4, 5) in radialer Richtung erstreckt.

3. Der Dämpfer wie in den Ansprüchen 1 und 2 beansprucht, wobei jede Halbschale (4, 5) an dem äußeren Rand (11) eine axiale ringförmige Kopplungsfläche (4a, 5a) aufweist;
wobei die Kopplungsflächen (5a) der gekoppelten Halbschalen (5) einander zugewandt in Kontakt angeordnet sind;
und wobei die Einzelschweißung (8) axial zwischen den Kopplungsflächen (4a, 5a) angeordnet ist und sich in radialer Richtung zwischen den Kopplungsflächen (4a, 5a) erstreckt.

4. Der Dämpfer wie in einem der vorhergehenden Ansprüche beansprucht, und mit einem Dichtungsring (14), der axial zwischen den Halbschalen (5) und radial zwischen der Kammer (6) und der Nabe (2) angeordnet ist und so gestaltet ist, dass er ein Austreten des viskosen Fluids aus der Kammer (6) zur Nabe (2) hin verhindert.

5. Der Dämpfer wie in einem der vorhergehenden Ansprüche beansprucht, wobei jede Halbschale (4, 5) einen ersten radialen Bereich (15) aufweist, der den inneren Rand (10) trägt und die Nabe (2) radial begrenzt, und einen zweiten radialen Bereich (16), der den äußeren Rand (11) trägt und die Kammer (6) begrenzt;
wobei die ersten miteinander gekoppelten Bereiche (15) einen radial inneren Bereich (17) des Dämpfers (1) definieren, und die zweiten miteinander gekoppelten Bereiche (16) einen radial äußeren Bereich (18) des Dämpfers (1) definieren,
und wobei der radial innere Bereich (17) eine axiale Dicke aufweist, die größer als die axiale Dicke des radial äußeren Bereichs (18) ist, vorzugsweise größer als ein Wert, der zwischen dem 1,1 und 2-fachen liegt, vorzugsweise zwischen dem 1,2- und 1,8-fachen, noch bevorzugter zwischen dem 1,2- und 1,4-fachen.

6. Der Dämpfer wie in einem der vorhergehenden Ansprüche beansprucht, wobei eine der Halbschalen (4, 5) an dem äußeren Rand (11) einen ersten axialen Vorsprung (19) aufweist, der sich in Richtung der anderen der Halbschalen (4, 5) erstreckt und in einen entsprechenden axialen Sitz (20) eingreift, der in der anderen der Halbschalen (5) ausgebildet ist, so dass die beiden Halbschalen (5) beim Verbinden, vorzugsweise durch eine Übermaßpassung, an dem freien Ende (13) eine komplementäre Form aufweisen.

7. Der Dämpfer wie in einem der vorhergehenden Ansprüche beansprucht, wobei eine der Halbschalen (4, 5) an dem inneren Rand (10) einen zweiten axialen Vorsprung (21) aufweist, der sich in Richtung der anderen der Halbschalen (4, 5) erstreckt und in einen entsprechenden axialen Sitz (22) eingreift, der in der anderen der Halbschalen (4, 5) ausgebildet ist, so dass die beiden Halbschalen (4, 5) eine komplementäre Form bei der Kopplung, vorzugsweise durch Übermaßpassung, an dem verklemmten Ende (12) aufweisen.

8. Der Dämpfer wie in einem der vorhergehenden Ansprüche beansprucht, wobei die Halbschalen (4, 5) eine im Wesentlichen symmetrische Form zueinander in Bezug auf eine radiale Mittelebene in Bezug auf die Mittelachse (A) aufweisen.

## Revendications

1. Amortisseur visqueux à torsion (1) destiné à amortir des vibrations de torsion transmises à un arbre (3) d'un moteur, l'amortisseur (1) ayant un axe de rotation central (A) et comprenant :
- un carter (4) et un capot (5) couplés ensemble pour délimiter une chambre fermée (6), annulaire par rapport à l'axe central (A) et contenant un liquide amortissant visqueux ; et
- une masse inertielle (7) contenue dans la chambre (6) de façon à être immergée dans le liquide visqueux ;
dans lequel
- l'amortisseur (1) comprend une paire de demi-coques (4, 5), une première demi-coque (4) définissant le carter et une deuxième demi-coque (5) définissant le capot, chaque demi-coque (4, 5) définissant une partie de ladite chambre (6) et une partie d'un moyeu axial (2) configuré pour être engagé par ledit arbre (3),
- les demi-coques (4, 5) sont axialement couplées l'une à l'autre afin de définir ensemble ladite chambre (6) et ledit moyeu (2),
- les demi-coques (4, 5) sont fixées l'une à l'autre au moyen d'une soudure unique (8) qui s'étend angulairement autour de l'axe central (A) ;
**caractérisé en ce que**
chaque demi-coque (4, 5) possède une forme annulaire autour de l'axe central (A) destinée à définir ledit moyeu (2), chaque demi-coque (4, 5) ayant un bord intérieur (10) faisant radialement face à l'axe central (A) et un bord extérieur (11) radialement opposé au bord intérieur (10) ;
- les bords intérieurs (10) des demi-coques (4, 5) couplées l'une à l'autre définissent une extrémité radiale calée (12) de l'amortisseur (1) configurée pour être fixée sur ledit arbre (3) ;
- les bords extérieurs (11) des demi-coques (4, 5) couplées l'une à l'autre définissent une extrémité radiale libre (13) de l'amortisseur (1) ;
et dans lequel ladite soudure unique (8) est placée au niveau de l'extrémité radiale libre (13).

2. Amortisseur selon la revendication 1, dans lequel ladite soudure unique (8) s'étend entre les demi-coques (4, 5) dans une direction radiale.

3. Amortisseur selon les revendications 1 et 2, dans lequel chaque demi-coque (4, 5) comprend, au niveau dudit bord extérieur (11), une surface de couplage annulaire axiale (4a, 5a) ;
dans lequel les surfaces de couplage (4a, 5a) des demi-coques (4, 5) couplées sont placées en contact en se faisant face ;
et dans lequel ladite soudure unique (8) est axialement interposée entre lesdites surfaces de couplage (4a, 5a) et s'étend dans la direction radiale entre lesdites surfaces de couplage (4a, 5a).

4. Amortisseur selon l'une quelconque des revendications précédentes, et comprenant une bague d'étanchéité (14) placée axialement entre les demi-coques (4, 5) et radialement interposée entre ladite chambre (6) et ledit moyeu (2) et configurée pour empêcher une fuite dudit liquide visqueux de ladite chambre (6) vers le moyeu (2).

5. Amortisseur selon l'une quelconque des revendications précédentes, dans lequel chaque demi-coque (4, 5) comporte une première partie radiale (15) portant ledit bord intérieur (10) et délimitant de façon radiale ledit moyeu (2), et une deuxième partie radiale (16) portant ledit bord extérieur (11) et délimitant ladite chambre (6) ;
dans lequel les premières parties (15) couplées l'une à l'autre définissent une partie radialement interne (17) de l'amortisseur (1), et les deuxièmes parties (16) couplées l'une à l'autre définissent une partie radialement externe (18) de l'amortisseur (1),
et dans lequel la partie radialement interne (17) possède une épaisseur axiale supérieure à l'épaisseur axiale de la partie radialement externe (18), de préférence supérieure à une valeur comprise entre 1,1 et 2 fois, de préférence comprise entre 1,2 et 1,8 fois, et de préférence comprise entre 1,2 et 1,4 fois.

6. Amortisseur selon l'une quelconque des revendications précédentes, dans lequel l'une desdites demi-coques (4, 5) comprend, au niveau dudit bord extérieur (11), une première protubérance axiale (19) s'étendant vers l'autre desdites demi-coques (4, 5) et engageant un siège axial correspondant (20) obtenu dans l'autre desdites demi-coques (4, 5), de sorte que les deux demi-coques (4, 5) possèdent une forme complémentaire lors du couplage, de préférence par ajustement serré, au niveau de ladite extrémité libre (13).

7. Amortisseur selon l'une quelconque des revendications précédentes, dans lequel l'une desdites demi-coques (4, 5) comprend, au niveau dudit bord intérieur (10), une deuxième protubérance axiale (21) s'étendant vers l'autre desdites demi-coques (4, 5) et engageant un siège axial correspondant (22) obtenu dans l'autre desdites demi-coques (4, 5), de sorte que les deux demi-coques (4, 5) possèdent une forme complémentaire lors du couplage, de préférence par ajustement serré, au niveau de ladite extrémité calée (12).

8. Amortisseur selon l'une quelconque des revendications précédentes, dans lequel les demi-coques (4, 5) possèdent une forme sensiblement symétrique l'une par rapport à l'autre par rapport à un plan radial médian par rapport à l'axe central (A).
